# EUROPEAN PATENT SPECIFICATION

(11) **EP 4 275 837 B1**
(45) Date of publication and mention of the grant of the patent: **15.10.2025**
(21) Application number: 23172080.6
(22) Date of filing: 08.05.2023
(51) Int. Cl.: B23D 47/04, B23D 45/02, B27C 5/06

(54) **METHOD AND WORK CENTRE TO PROCESS SECTION BARS, IN PARTICULAR MADE OF ALUMINIUM, LIGHT ALLOYS, PVC OR THE LIKE**
VERFAHREN UND BEARBEITUNGSZENTRUM ZUR BEARBEITUNG VON PROFILSTÄBEN, INSBESONDERE AUS ALUMINIUM, LEICHTMETALLLEGIERUNGEN, PVC ODER DERGLEICHEN
PROCÉDÉ ET CENTRE DE TRAVAIL POUR TRAITER DES BARRES PROFILÉES, EN PARTICULIER EN ALUMINIUM, ALLIAGES LÉGERS, PVC OU SIMILAIRES

(30) Priority: 11.05.2022 IT 202200009743
(43) Date of publication of application: 15.11.2023
(73) Proprietor: F.O.M. Industrie S.r.l., 47841 Cattolica (IT)
(72) Inventor: LATTANZI, Lorenzo, 47841 CATTOLICA (RN) (IT)
(74) Representative: Studio Torta S.p.A.

(56) References cited:
- EP-A1- 3 912 757
- CN-A- 112 317 870
- CN-B- 109 047 907

## Description

### TECHNICAL FIELD

This invention relates to a work centre to process section bars, in particular made of aluminium, light alloys, PVC or the like.

### BACKGROUND

In the section bar processing field, it is known to provide a work centre of the type comprising an elongated base extending in a substantially horizontal direction; a processing station mounted along the base and provided with a support surface for at least one section bar; and an operating unit mounted in the processing station and provided with a cutting blade for separating a component from the section bar itself.

The work centre further comprises a first transport unit for moving the section bar along the base and through the processing station in the above-mentioned direction; and a second transport unit for taking the component from the processing station and moving it forward along the base in the same direction. The document CN 112 317 870 A discloses a work centre according to the prior art, which processes section bars.

The work centres for processing known section bars of the type described above have some drawbacks, mainly deriving from the fact that withdrawing the component from the processing station via the second transport unit entails dragging the component across the support surface and, thus, the formation of scuffing and damage of the component due to the friction with the support surface and the presence of processing shavings and/or swarf on the support surface itself.

### SUMMARY

The object of the present invention is to provide a work centre to process section bars, in particular made of aluminium, light alloys, PVC or the like, which is free of the drawbacks described above and that is simple and cost-effective to implement.

According to this invention, a work centre to process section bars, in particular made of aluminium, light alloys, PVC or the like, is provided, as claimed in the attached claims.

### BRIEF DESCRIPTION OF THE DRAWINGS

The present invention will now be described with reference to the attached drawings that illustrate a nonlimiting embodiment thereof, in which:
Figure 1 is a schematic perspective view, with parts removed for clarity, of a preferred embodiment of the work centre of the present invention;
Figures 2, 3, and 4 are three schematic perspective views, with parts removed for clarity, of a detail of the work centre in Figure 1, illustrated in three different operating positions; and
Figure 5 is a schematic perspective view, with parts removed for clarity, of a detail in Figures 2, 3, and 4.

### DESCRIPTION OF EMBODIMENTS

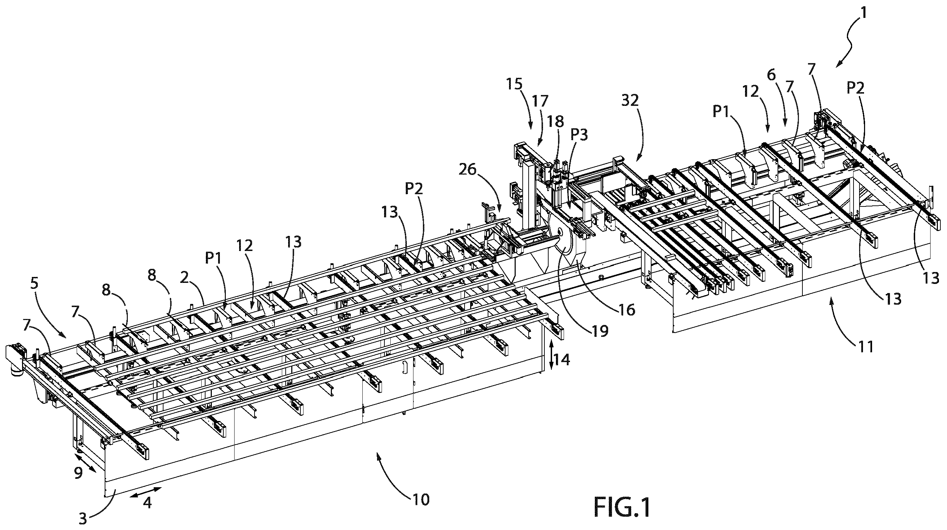

With reference to Figure 1, reference number 1 indicates, as a whole, a work centre to process section bars 2 made of aluminium, light alloys, PVC or the like of an elongated shape.

The work centre 1 comprises an elongated base 3 extending in a horizontal direction 4, and which is provided with two roller support devices 5, 6 mounted in succession along the base 3.

Each device 5, 6 has multiple motorised rollers 7, which are mounted to rotate about respective rotation axes 8 substantially parallel to one another and to a horizontal direction 9 transversal to the direction 4, and they define a lower support surface P1 for at least one section bar 2.

The work centre 1 is also provided with a loading station 10 for the section bars 2 to be processed on the device 5 and an unloading station 11 for the section bars 2 just processed from the device 6.

Each station 10, 11 comprises a conveyor belt 12, facing the corresponding device 5, 6 in the direction 9, and comprises, in turn, a plurality of conveying belts 13, which are parallel to one another and to the direction 9, define a lower support surface P2 for at least one section bar 2, and extend, each, between corresponding, adjacent rollers 7.

The rollers 7 are mobile in a vertical direction 14 that is orthogonal to the directions 4 and 9 between a raised operating position, wherein the surface P1 extends above the surface P2, and a lowered rest position, wherein the surface P1 extends below the surface P2.

The work centre 1 also has a processing station 15, which is obtained along the base 3, between the stations 10, 11, and extends between the devices 5, 6.

The station 15 comprises a support frame 16 configured to define a support surface P3 that is substantially coplanar to the surfaces P1 when the rollers 7 are arranged in their raised operating position.

The station 15 is also provided with an operating unit 17 comprising, in this case, an electrospindle 18 to perform the processing of the section bars 2, and a cutting blade 19 to separate a component 20 from each section bar 2.

The blade 19 is mobile in the direction 14 between a lowered rest position, wherein the blade 19 is arranged below the surface P3, and a raised operating position, wherein the blade 19 projects above the surface P3 to separate the component 20 from the section bar 2.

The station 15 is further provided with a vertical pressing device 21 comprising two pressing members 22 parallel with each other extending in the direction 14, which are mounted on opposite sides of a cutting plane of the blade 19 in the direction 4, and are mobile in the direction 14 between a lowered position for clamping the section bar 2 against the surface P3 and a raised position for releasing the section bar 2 itself.

The station 15 is further provided with a horizontal pressing device 23 comprising two pressing members 24 parallel to each other, which extend in the direction 9, are mounted on opposite sides of the cutting plane of the blade 19 in the direction 4, and are mobile in the direction 9 between a forward position for clamping the section bar 2 against a limit stop member 25 and a retracted position for releasing the section bar 2.

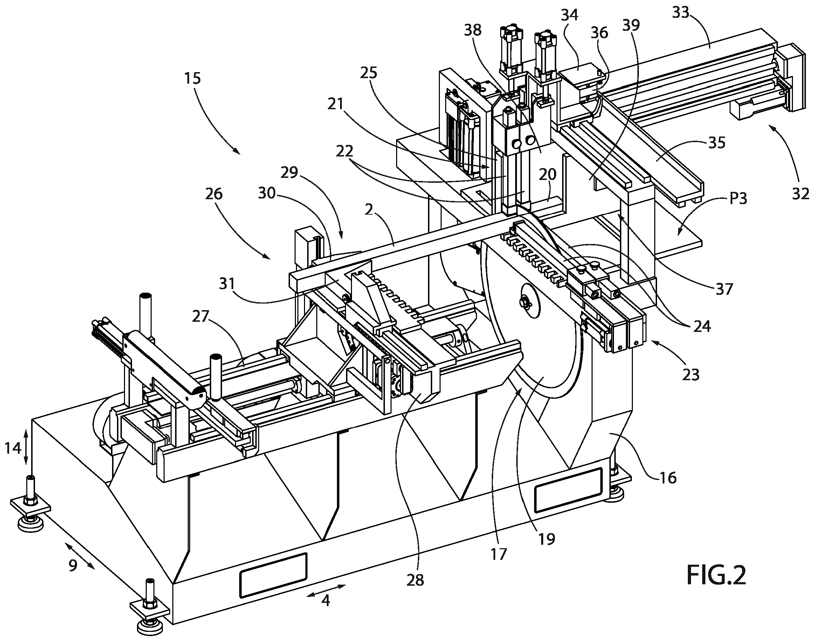

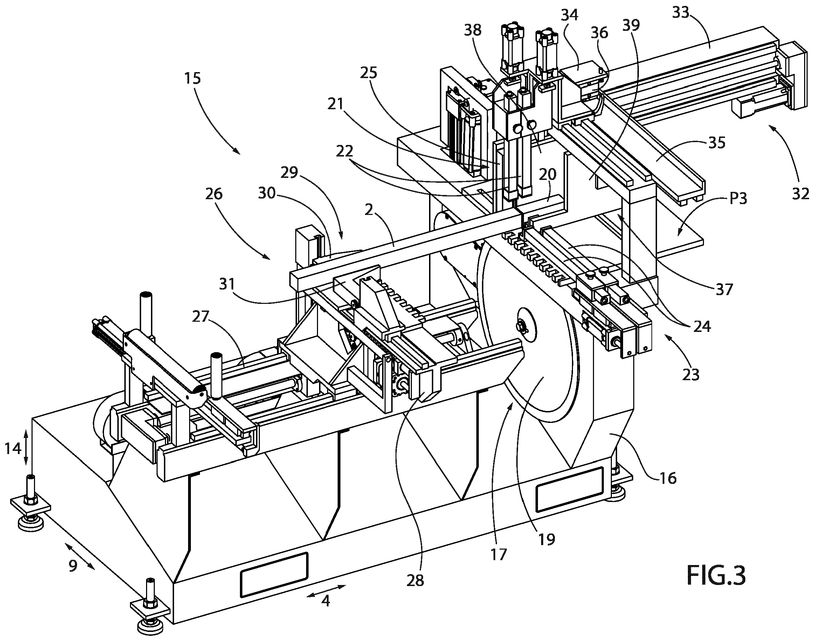

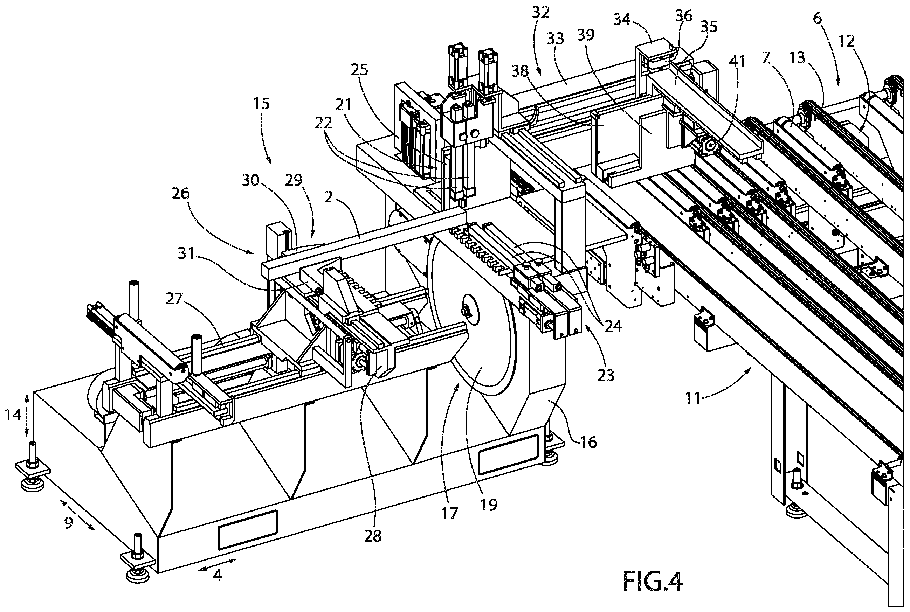

According to Figures 2, 3, and 4, the station 15 further comprises a holding and transport device 26, which is mounted between the device 5 and the unit 17, and comprises, in turn, a guide 27 parallel to the direction 4, a slide 28 coupled with the guide 27 so it can slide, making straight movements in the direction 4, and a clamping vice 29 mounted on the slide 28.

The vice 29 comprises a first jaw 30 fixed to the slide 28 and a second jaw 31 mounted on the slide 28 to move in the direction 9 between a section bar 2 clamping position and a section bar 2 release position.

The work centre 1 also comprises a transport unit 32 for transferring the components 20 from the station 15 to the rollers 7 of the device 6.

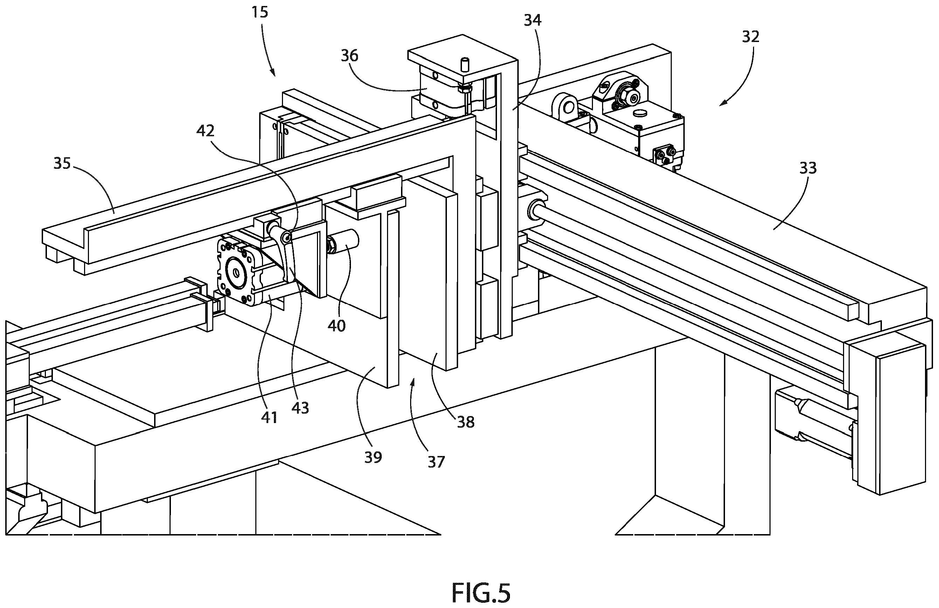

With reference to Figure 5, the unit 32 comprises a guiding crossbar 33, which projects from the frame 16 in the direction 4, and extends along an entry portion of the device 6, and a horizontal slide 34 coupled to the crossbar 33 so it can slide, making straight movements in the direction 4.

The unit 32 further comprises a vertical slide 35, which extends above the base 3 in the direction 9, and is coupled to the slide 34 so it can slide, making straight movements in the direction 14 under the thrust of an actuator cylinder 36 fixed to the slide 34 parallel to the direction 14 itself.

The slide 35 supports a clamping vice 37 comprising a first flat jaw 38, which is fixed to the slide 35 perpendicularly to the direction 9, and extends in the direction 4; and a second flat jaw 39, which extends in the direction 4, is perpendicular to the direction 9, and is coupled to the slide 35 so that it can slide, making straight movements in the direction 9 between a component 20 clamping position and a component 20 release position.

The jaw 39 is fixed to a free end of a rod 40 exiting an actuator cylinder 41, which is mounted on the slide 35 parallel to the direction 9, and is coupled to the slide 35 so it can slide to selectively control the initial position of the cylinder 41 and, thus, of the jaw 39 in the direction 9.

The cylinder 41 is locked along the slide 35 in the direction 9 via a locking pin 42 that can be activated using an activating crank 43.

With regard to the above description, it should be noted that the jaw 39 is shaped so as to extend, during the cut of the section bar 2, between the component 20 and the pressing member 24 mounted downstream of the cutting plane of the blade 19. In other words, during the cut of the section bar 2, the jaw 39 is clamped against the component 20 by the pressing member 24 mounted downstream of the cutting plane of the blade 19.

The operation of the work centre 1 will now be described with reference to Figures 1-4 and beginning from the moment when a section bar 2 is transferred by the conveyor belt 12 of the loading station 10 on rollers 7 of the roller support device 5.

The section bar 2 is, first of all, moved by the rollers 7 of the device 5 to the processing station 15, is then held by the clamping vice 29, and is moved forward on the surface P3, and is, finally, cut by the cutting blade 19 to separate the component 20.

Once separated from the section bar 2, the component 20 is held by the clamping vice 37, is raised from the surface P3 in the direction 14, is moved forward by the vice 37 along the base 3 above the entry portion of the roller support device 6, and is, finally, released by the vice 37 onto the rollers 7 of the device 6.

According to a variant not shown, the jaw 38 is mobile in the direction 9 to disengage the component 20 once released onto the rollers 7 of the device 6.

The work centre 1 has some advantages mainly deriving from the fact that the components 20 are raised from the surface P3 using the vice 37 and transferred onto the rollers 7 of the device 6 without dragging across the surface P3. As a result, the transport unit 32 makes it possible to transfer the components 20 from the station 15 to the device 6 with an operating sequence avoiding dragging components 20 on the surface P3 and, thus, the formation of scuffing and damage of the components 20 due to friction with the surface P3 and the presence of processing shavings and/or swarf on the surface P3.

According to a variant not shown, the roller support device 5 and the loading station 10 and/or the roller support device 6 and the unloading station 11 are eliminated, the section bar 2 is loaded by staff directly into the holding and transport device 26, and the component 20 is released by the transport unit 32 onto an unloading surface.

## Claims

1. A work centre to process section bars (2), in particular made of aluminium, light alloys, PVC or the like, comprising an elongated base (3, 16) extending in a first direction (4); a processing station (15) mounted along the base (3, 16) and provided with a support surface (P3) for a section bar (2); an operating unit (17) mounted in the processing station (15) and provided with a cutting blade (19) to separate a component (20) from the section bar (2); a first transport unit (5, 26) to move the section bar (2) along the base (3, 16) and through the processing station (15) in the first direction (4); and a second transport unit (32) to retrieve the component (20) from the processing station (15) and move it in the first direction (4); the second transport unit (32) comprising a first clamping vice (37) configured to lift the component (20) from the first support surface (P3), in particular in a second direction (14) orthogonal to the support surface (P3); and **characterized in that** the processing station (15) further comprises a limit stop member (25) mounted above the support surface (P3) and a pair of further pressing members (24) mounted on opposite sides of a cutting plane of the cutting blade (19) in the first direction (4) in order to lock the section bar (2) against the limit stop member (25) in a third direction (9), which is transverse to the first direction (4) and parallel to the support surface (P3), and **in that** the first clamping vice (37) comprises two holding jaws (38, 39), one of them being shaped so as to extend, during the cut of the section bar (2), between the component (20) and the further pressing member (24) mounted downstream of the cutting plane of the cutting blade (19) in order to be clamped against the component (20) by the further pressing member (24) mounted downstream of the cutting plane of the cutting blade (19) .

2. The work centre according to claim 1, wherein the first clamping vice (37) comprises two holding jaws (38, 39), which are movable relative to one another in a third direction (9), which is transverse to the first direction (4), between a clamping position and a release position to clamp and release the component (20) and, furthermore, are movable between a lowered position and a lifted position, in particular in the second direction (14).

3. The work centre according to any one of the preceding claims, wherein the cutting blade (19) is movable in a second direction (14) orthogonal to the support surface (P3), in particular between a lowered position, in which the cutting blade (19) extends under the support surface (P3), and a lifted position, in which the cutting blade (19) projects above the support surface (P3) in order to separate the component (20) from the section bar (2).

4. The work centre according to any one of the preceding claims, wherein the first transport unit (5, 26) comprises a holding device (26) movable along the base (3, 16) in the first direction (4).

5. The work centre according to claim 4, wherein the holding device (26) comprises a second clamping vice (29) configured to lift the section bar (2) from the support surface (P3).

6. The work centre according to any one of the preceding claims, wherein the processing station (15) further comprises a pair of pressing members (22) mounted on opposite sides of a cutting plane of the cutting blade (19) in the first direction (4) in order to lock the section bar (2) against the support surface (P3).

7. A method to process section bars (2), in particular made of aluminium, light alloys, PVC or the like, in a work centre comprising an elongated base (3, 16) extending in a first direction (4) and a processing station (15), which is mounted along the base (3), is provided with a support surface (P3) for a section bar (2) and is further provided with a cutting blade (19); the method comprising the steps of:
lifting the section bar (2) from the support surface (P3) by means of a second clamping vice (29);
moving the second clamping vice (29) along the base (3) in the first direction (4) in order to move the section bar (2) along the base (3) and through the processing station (15) in the first direction (4);
separating a component (20) from the section bar (2) by means of the cutting blade (19);
lifting the component (20) from the support surface (P3) by means of a first clamping vice (37); and
moving the first clamping vice (37) in the first direction (4) in order to remove the component (20) from the processing station (15) .

8. The method according to claim 7, wherein the first clamping vice (37) comprises two holding jaws (38, 39); the method comprising the steps of:
releasing the component (20) onto a support surface; and
moving the holding jaws (38, 39) of the first clamping vice (37) to a release position of the component (20), in which both holding jaws (38, 39) disengage the component (20).

## Patentansprüche

1. Bearbeitungszentrum zum Bearbeiten von Profilstäben (2), insbesondere aus Aluminium, Leichtmetall, PVC oder dergleichen, mit einer länglichen Basis (3, 16), die sich in einer ersten Richtung (4) erstreckt; einer Bearbeitungsstation (15), die entlang der Basis (3, 16) montiert und mit einer Auflagefläche (P3) für einen Profilstab (2) versehen ist; einer Betriebseinheit (17), die in der Bearbeitungsstation (15) montiert und mit einem Schneidmesser (19) versehen ist, um ein Bauteil (20) von dem Profilstab (2) zu trennen; eine erste Transporteinheit (5, 26), um den Profilstab (2) entlang der Basis (3, 16) und durch die Bearbeitungsstation (15) in der ersten Richtung (4) zu bewegen; und eine zweite Transporteinheit (32), um das Bauteil (20) aus der Bearbeitungsstation (15) zu holen und es in der ersten Richtung (4) zu bewegen; wobei die zweite Transporteinheit (32) einen ersten Spannstock (37) umfasst, der so konfiguriert ist, dass er das Bauteil (20) von der ersten Auflagefläche (P3) anhebt, insbesondere in einer zweiten Richtung (14) orthogonal zu der Auflagefläche (P3); und **dadurch gekennzeichnet, dass** die Bearbeitungsstation (15) ferner ein oberhalb der Auflagefläche (P3) montiertes Begrenzungselement (25) und ein Paar weiterer Druckelemente (24) umfasst, die auf gegenüberliegenden Seiten einer Schneidebene des Schneidmessers (19) in der ersten Richtung (4) montiert sind, um den Profilstab (2) gegen das Begrenzungselement (25) in einer dritten Richtung (9) zu verriegeln, die quer zu der ersten Richtung (4) und parallel zu der Auflagefläche (P3) verläuft, und dadurch, dass der erste Spannstock (37) zwei Haltebacken (38, 39) umfasst, von denen eine so geformt ist, dass sie sich während des Schneidens des Profilstabs (2) zwischen dem Bauteil (20) und dem weiteren Druckelement (24) erstreckt, das stromabwärts der Schneidebene des Schneidmessers (19) montiert ist, um von dem weiteren Druckelement (24), das stromabwärts der Schneidebene des Schneidmessers (19) montiert ist, gegen das Bauteil (20) eingespannt zu werden.

2. Bearbeitungszentrum nach Anspruch 1, wobei der erste Spannstock (37) zwei Haltebacken (38, 39) umfasst, die relativ zueinander in einer dritten Richtung (9), die quer zur ersten Richtung (4) ist, zwischen einer Spannposition und einer Freigabeposition zum Einspannen und Freigeben des Bauteils (20) bewegbar sind und ferner zwischen einer abgesenkten Position und einer angehobenen Position bewegbar sind, insbesondere in der zweiten Richtung (14) .

3. Bearbeitungszentrum nach einem der vorhergehenden Ansprüche, wobei das Schneidmesser (19) in einer zweiten Richtung (14) orthogonal zur Auflagefläche (P3) bewegbar ist, insbesondere zwischen einer abgesenkten Position, in der sich das Schneidmesser (19) unter der Auflagefläche (P3) erstreckt, und einer angehobenen Position, in der das Schneidmesser (19) über die Auflagefläche (P3) hinausragt, um das Bauteil (20) von dem Profilstab (2) zu trennen.

4. Bearbeitungszentrum nach einem der vorhergehenden Ansprüche, wobei die erste Transporteinheit (5, 26) eine Haltevorrichtung (26) umfasst, die entlang der Basis (3, 16) in der ersten Richtung (4) bewegbar ist.

5. Bearbeitungszentrum nach Anspruch 4, wobei die Haltevorrichtung (2 6) einen zweiten Spannstock (29) umfasst, der konfiguriert ist, um den Profilstab (2) von der Auflagefläche (P3) anzuheben.

6. Bearbeitungszentrum nach einem der vorhergehenden Ansprüche, wobei die Bearbeitungsstation (15) ferner ein Paar von Druckelementen (22) umfasst, die auf gegenüberliegenden Seiten einer Schneidebene des Schneidmessers (19) in der ersten Richtung (4) montiert sind, um den Profilstab (2) gegen die Auflagefläche (P3) zu verriegeln.

7. Verfahren zum Bearbeiten von Profilstäben (2), insbesondere aus Aluminium, Leichtmetalllegierungen, PVC oder dergleichen, in einem Bearbeitungszentrum, mit einer länglichen Basis (3, 16), die sich in einer ersten Richtung (4) erstreckt, und einer Bearbeitungsstation (15), die entlang der Basis (3) montiert ist, mit einer Auflagefläche (P3) für einen Profilstab (2) versehen ist und ferner mit einem Schneidmesser (19) versehen ist; wobei das Verfahren die folgenden Schritte umfasst:
Anheben des Profilstabs (2) von der Auflagefläche (P3) mittels eines zweiten Spannstocks (29);
Bewegen des zweiten Spannstocks (29) entlang der Basis (3) in der ersten Richtung (4), um den Profilstab (2) entlang der Basis (3) und durch die Bearbeitungsstation (15) in der ersten Richtung (4) zu bewegen;
Abtrennen eines Bauteils (20) von dem Profilstab (2) mittels des Schneidmessers (19);
Anheben des Bauteils (20) von der Auflagefläche (P3) mittels eines ersten Spannstocks (37); und
Bewegen des ersten Spannstocks (37) in der ersten Richtung (4), um das Bauteil (20) aus der Bearbeitungsstation (15) zu entfernen.

8. Verfahren nach Anspruch 7, wobei der erste Spannstock (37) zwei Haltebacken (38, 39) umfasst; wobei das Verfahren die folgenden Schritte umfasst:
Freigeben des Bauteils (20) auf eine Auflagefläche; und
Bewegen der Haltebacken (38, 39) des ersten Spannstocks (37) in eine Freigabeposition des Bauteils (20), in der beide Haltebacken (38, 39) das Bauteil (20) außer Eingriff bringen.

## Revendications

1. Centre de travail pour traiter des barres profilées (2), en particulier en aluminium, alliages légers, PVC ou similaires, comprenant une base allongée (3, 16) s'étendant dans une première direction (4) ; un poste de traitement (15) monté le long de la base (3, 16) et pourvu d'une surface de support (P3) pour une barre profilée (2) ; une unité opérationnelle (17) montée dans le poste de traitement (15) et pourvue d'une lame de coupe (19) pour séparer un composant (20) de la barre profilée (2) ; une première unité de transport (5, 26) pour déplacer la barre profilée (2) le long de la base (3, 16) et à travers le poste de traitement (15) dans la première direction (4) ; et une seconde unité de transport (32) pour récupérer le composant (20) à partir du poste de traitement (15) et le déplacer dans la première direction (4) ; la seconde unité de transport (32) comprend un premier étau de serrage (37) configuré pour soulever le composant (20) par rapport à la première surface de support (P3), en particulier dans une deuxième direction (14) orthogonale à la surface de support (P3) ; et **caractérisé en ce que** le poste de traitement (15) comprend en outre un élément de butée (25) monté au-dessus de la surface de support (P3) et une paire d'autres éléments de pression (24) montés sur les côtés opposés d'un plan de coupe de la lame de coupe (19) dans la première direction (4) afin de bloquer la barre profilée (2) contre l'élément de butée (25) dans une troisième direction (9), qui est transversale à la première direction (4) et parallèle à la surface de support (P3), et **en ce que** le premier étau de serrage (37) comprend deux mâchoires de maintien (38, 39), l'une d'elles étant conformée pour s'étendre, lors de la coupe de la barre profilée (2), entre le composant (20) et l'élément de pression supplémentaire (24) monté en aval du plan de coupe de la lame de coupe (19) afin d'être serrée contre le composant (20) par l'élément de pression supplémentaire (24) monté en aval du plan de coupe de la lame de coupe (19).

2. Centre de travail selon la revendication 1, dans lequel le premier étau de serrage (37) comprend deux mâchoires de maintien (38, 39), qui sont mobiles l'une par rapport à l'autre dans une troisième direction (9), qui est transversale à la première direction (4), entre une position de serrage et une position de libération pour serrer et libérer le composant (20) et, en outre, sont mobiles entre une position abaissée et une position soulevée, en particulier dans la deuxième direction (14).

3. Centre de travail selon l'une quelconque des revendications précédentes, dans lequel la lame de coupe (19) est mobile dans une deuxième direction (14) orthogonale à la surface de support (P3), notamment entre une position abaissée, dans laquelle la lame de coupe (19) s'étend sous la surface de support (P3), et une position soulevée, dans laquelle la lame de coupe (19) fait saillie au-dessus de la surface de support (P3) afin de séparer le composant (20) de la barre de profilé (2).

4. Centre de travail selon l'une quelconque des revendications précédentes, dans lequel la première unité de transport (5, 26) comprend un dispositif de maintien (26) mobile le long de la base (3, 16) dans la première direction (4).

5. Centre de travail selon la revendication 4, dans lequel le dispositif de maintien (2 6) comprend un second étau de serrage (29) configuré pour soulever la barre profilée (2) par rapport à la surface de support (P3).

6. Centre de travail selon l'une quelconque des revendications précédentes, dans lequel le poste de traitement (15) comprend en outre une paire d'éléments de pression (22) montés sur les côtés opposés d'un plan de coupe de la lame de coupe (19) dans la première direction (4) afin de bloquer la barre profilée (2) contre la surface de support (P3).

7. Procédé de traitement de barres profilées (2), en particulier en aluminium, alliages légers, PVC ou similaires, dans un centre de travail comprenant une base allongée (3, 16) s'étendant dans une première direction (4) et un poste de traitement (15), qui est monté le long de la base (3), est pourvu d'une surface de support (P3) pour une barre profilée (2) et est pourvu en outre d'une lame de coupe (19) ; le procédé comprenant les étapes suivantes :
le soulèvement de la barre profilée (2) par rapport à la surface de support (P3) au moyen d'un second étau de serrage (29) ;
le déplacement du second étau de serrage (29) le long de la base (3) dans la première direction (4) afin de déplacer la barre profilée (2) le long de la base (3) et à travers le poste de traitement (15) dans la première direction (4) ;
la séparation d'un composant (20) de la barre profilée (2) au moyen de la lame de coupe (19) ;
le soulèvement du composant (20) par rapport à la surface de support (P3) au moyen d'un premier étau de serrage (37) ; et
le déplacement du premier étau de serrage (37) dans la première direction (4) afin de retirer le composant (20) de la station de traitement (15).

8. Procédé selon la revendication 7, dans lequel le premier étau de serrage (37) comprend deux mâchoires de maintien (38, 39) ; le procédé comprend les étapes suivantes :
la libération du composant (20) sur une surface de support ; et
le déplacement des mâchoires de maintien (38, 39) du premier étau de serrage (37) jusqu'à une position de libération du composant (20), dans laquelle les deux mâchoires de maintien (38, 39) se désengagent du composant (20).
